# EUROPEAN PATENT APPLICATION

(11) **EP 2 693 292 A1**
(43) Date of publication of application: **05.02.2014**
(21) Application number: 12178864.0
(22) Date of filing: 01.08.2012
(51) Int. Cl.: G06F 1/16

(54) **Input device for use with a portable electronic device**

(71) Applicant: BlackBerry Limited, Waterloo, ON N2K 0A7 (CA)
(72) Inventor: Prociw, Philip James, Waterloo, Ontario N2L 3W8 (CA); Parton, William Ryan David, Waterloo, Ontario N2L 3W8 (CA); Tobola, Bogdan James, Waterloo, Ontario N2L 3W8 (CA)
(74) Representative: Moore, Barry

(57) **Abstract**

An input device includes a body releasably attachable to a portable electronic device having a touch-sensitive display, the body comprising a plurality of selectable elements, a plurality of contacts for contacting the touch-sensitive display when the input device is attached to the portable electronic device. The body also includes a controller operatively coupled to the selectable elements and to the contacts for receiving a selection of one of the selectable elements, identifying one or more of the contacts based on receipt of selection of the one of the selectable elements, and providing an output utilizing the one or more of the contacts that are identified.

## Description

### Field of Technology

The present disclosure relates to input devices for portable electronic devices having touch-sensitive displays.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile appliances such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

### Summary

An input device for a portable electronic device includes a body releasably attachable to a portable electronic device having a touch-sensitive display, the body comprising a plurality of selectable elements, a plurality of contacts for contacting the touch-sensitive display when the input device is attached to the portable electronic device, and a controller operatively coupled to the selectable elements and to the contacts for receiving a selection of one of the selectable elements, identifying one or more of the contacts based on receipt of the selection of the one of the selectable elements, and providing an output utilizing the one or more of the contacts that are identified.

### Brief Description of the Drawings

FIG. 1 is a block diagram of a portable electronic device in accordance with the disclosure.

FIG. 2 is a block diagram of an input device in accordance with the disclosure.

FIG. 3 is a flowchart illustrating the operation of the input device shown in FIG. 2 in accordance with the disclosure.

FIG. 4 is a flowchart illustrating the operation of a portable electronic device shown in FIG. 1 in accordance with the disclosure.

FIG. 5 is a front perspective view of an input device in accordance with the disclosure.

FIG. 6 is a rear perspective view of the input device shown in FIG. 5 in accordance with the disclosure.

FIG. 7 is a perspective view of an example of the input device shown in FIG. 5 attached to a portable electronic device in accordance with the disclosure.

FIG. 8 is a side view of the input device attached to a portable electronic device shown in FIG. 5 in accordance with the disclosure.

FIG. 9 is a side view of another example of an input device attached to a portable electronic device in accordance with the disclosure.

FIG. 10 is a front perspective view of another example of the input device attached to a portable electronic device in accordance with the disclosure.

FIG. 11 is a rear perspective view of the input device shown in FIG. 10 in accordance with the disclosure.

FIG. 12 is a front perspective view of another example of the input device attached to a portable electronic device in accordance with the disclosure.

FIG. 13 is a front perspective view of another example of the input device attached to a portable electronic device in accordance with the disclosure.

FIG. 14 is a rear perspective view of the input device shown in FIG. 14 in accordance with the disclosure.

FIG. 15 is a front perspective view of another example of the input device attached to a portable electronic device in accordance with the disclosure.

FIG. 16 is a rear perspective view of the input device shown in FIG. 16 in accordance with the disclosure.

FIG. 17 is a flowchart illustrating further operation of the input device shown in FIG. 2 in accordance with the disclosure.

### Detailed Description

The following describes an input device for a portable electronic device that includes a body releasably attachable to a portable electronic device having a touch-sensitive display, the body comprising a plurality of selectable elements, a plurality of contacts for contacting the touch-sensitive display when the input device is attached to the portable electronic device, and a controller operatively coupled to the selectable elements and to the contacts for receiving a selection of one of the selectable elements, identifying one or more of the contacts based on receipt of the selection of the one of the selectable elements, and providing an output utilizing the one or more of the contacts that are identified.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an input device for use with a portable electronic device. Examples of portable electronic devices include mobile, or handheld wireless communication devices such as pagers, cellular phones, smartphones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

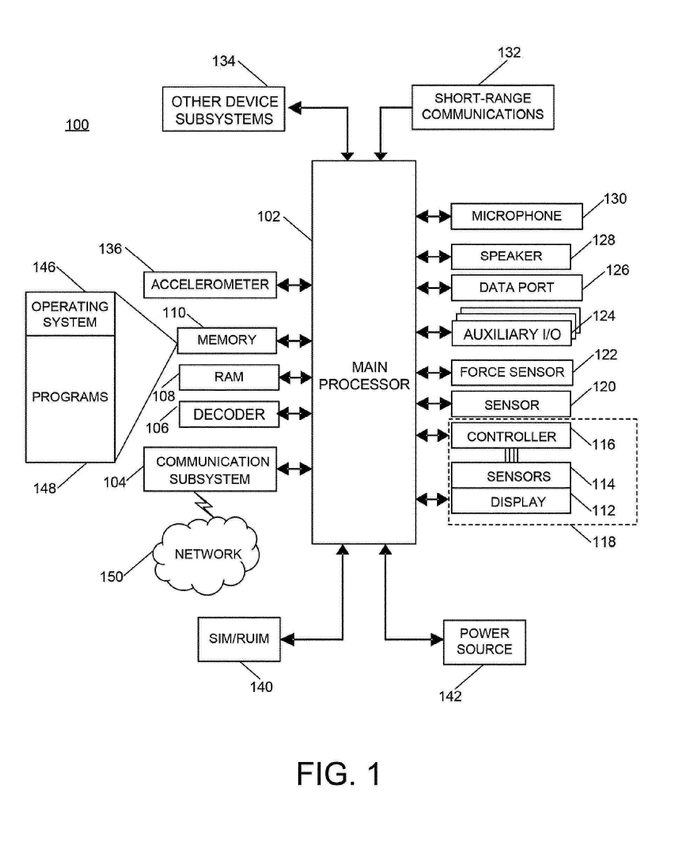

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not lim ited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, non volatile memory 110, a display 112 with touch sensors 114 operably connected to an electronic controller 116 that together comprise a touch-sensitive display 118, a sensor 120, an auxiliary input/output (I/O) subsystem 124, a data port 126, a speaker 128, a microphone 130, short-range communications 132, and other device subsystems 136. The processor 102 may interact with one or more force sensors 122. Interaction with a graphical user interface is performed through the touch sensor 114. The processor 102 interacts with the touch sensor 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-reaction forces.

To identify a subscriber for network access, the portable electronic device 100 uses a Subscriber Identity Module or a Removable User Identity Module (SIM/RUIM) card 140 for communication with a network, such as the wireless network 150. Alternatively, user identification information may be programmed into the non volatile memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 136.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be a capacitive touch-sensitive display, as known in the art. The touch sensors 114 are capacitive touch sensors. The capacitive touch sensors may be any suitable material, such as patterned indium tin oxide (ITO).

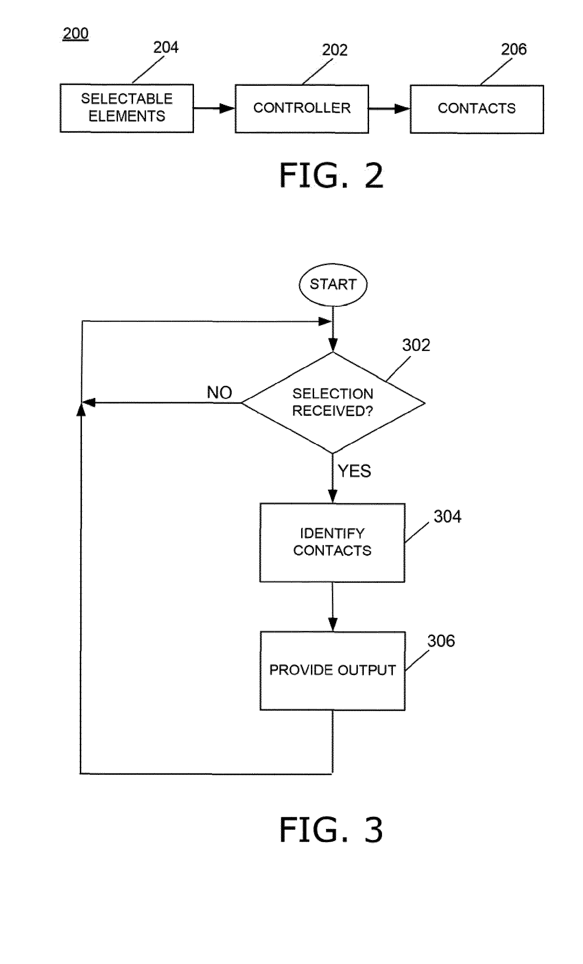

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x and y components may be determined by signals generated from the touch-sensor layers, also referred to as touch sensors. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. A touch may also be detected from an input device 200 (FIG. 2) that is releasably attachable to the portable electronic device 100, as described further below. The controller 116 and/or the processor 102 may detect a touch by any suitable input member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to an end point. A gesture may be identified by attributes of the gesture, including the origin point, the end point, the distance traveled, the duration, the velocity, and the direction, for example. A gesture may be long or short in distance and/or duration. Two points of the gesture may be utilized to determine a direction of the gesture. A hover may be a touch at a location that is generally unchanged over a period of time or is associated with the same selection item for a period of time.

A force sensor 122 may be disposed in or underneath the touch-sensitive display 118. The force sensor 122 may be a force-sensitive resistor, a strain gauge, a piezoelectric or piezoresistive device, a pressure sensor, or other suitable device. Force as utilized throughout the specification, including the claims, refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zoom ing.

The sensor 120 may detect when an input device 200 (FIG. 2) is releasably attached to the portable electronic device 1 00. A signal is provided to the processor 102 from the sensor 120 when the input device 200 (FIG. 2) is releasably attached to the portable electronic device 1 00. The signal indicates that touches detected on the touch-sensitive display 118 are touches generated by the input device 200.

A block diagram of an example of an input device 200 for the portable electronic device 100 is shown in FIG. 2. The input device 200 includes a controller 202 that controls the operation of the input device 200. The controller 202 is coupled to a plurality of selectable elements 204, and a plurality of contacts 206. The controller 202 interacts with each selectable element 204, and with each contact 206. The controller 202 receives a signal when one or more of the selectable elements 204 are selected. The controller 202 identifies one or more contacts 206 to turn on and turn off, and controls the contacts 206 by turning on and turning off one or more of the contacts 206 that are identified to provide an output that is associated with the one or more selectable elements 204. Optionally, the controller 202 receives a signal when a selection of a selectable element 204 ends. When a selection of a selectable element 204 ends, the controller 202 may identify one or more contacts 206 to turn on and turn off, and controls one or more of the contacts 206 by turning on and turning off the one or more contacts 206 that are identified to provide an output that is associated with the end of selection of the one or more selectable elements 204.

The input device 200 is releasably attachable to the portable electronic device 100 such that each contact 206 is in contact with the touch-sensitive display 118 at a location on the touch-sensitive display 118 when the input device 200 is attached to the portable electronic device 1 00.

The selectable elements 204 may include keys of a keyboard. The keys of the keyboard may be, for example, mechanical keys or touch-sensitive keys. The keyboard may be a full keyboard in which each alphabetical character is associated with a respective key. The full keyboard may be, for example, a QWERTY keyboard, an AZERTY keyboard, a QWERTZ keyboard, or Dvorak keyboard. Alternatively, the keyboard may be a reduced keyboard in which each of a plurality of keys of the keyboard is associated with more than one alphabetical character. Optionally, the selectable elements 204 may include directional keys. Each directional key is associated with a direction of movement such that an object, for example, a cursor, that is displayed on the touch-sensitive display 118 moves in a direction corresponding to the directional key when the directional key is selected. Optionally, the selectable elements 204 may include keys that are associated with functions of the portable electronic device 100.

The input device 200 may include any suitable number of contacts 206. For example, the input device 200 may include n distinct contacts 206, and 2ⁿ selectable elements 204, where n is any positive integer. Alternatively, the input device 200 may include less than 2ⁿ selectable elements 204.

The output provided by the contacts 206 may be associated with a binary sequence that includes zeros (0) and ones (1). The zeros (0) indicate that a contact 206 is turned off and the ones (1) indicate that a contact 206 is turned on. The controller 202 may utilize the binary sequence to identify which of the contacts 206 to turn on and to turn off. The contacts 206 may be identified as contact 1, contact 2, ..., contact n. The binary sequence may include any suitable number of bits. example, the binary sequence may include n bits such that each of the n contacts 206 is associated with one bit of the binary sequence. Alternatively, the binary sequence may include 2n bits such that the controller 202 turns on and turns off n contacts in two consecutive time periods to provide the output.

Each contact 206 is electrically conductive. The controller 202 turns on a contact 206 by, for example, applying a voltage across the contact 206. By applying a voltage across the contact 206, the controller 202 changes the capacitance value of the contact 206. Optionally, the controller 202 turns off the contact 206 by discontinuing the application of voltage across the contact 206. By discontinuing the application of voltage across the contact 206, the capacitance of the contact 206 returns to a default capacitance value.

A flowchart illustrating a method of operating the input device 200 is shown in FIG. 3. The method may be carried out by software executed, for example, by the controller 202. Coding of software for carrying out such a method is within the scope of a person of ordinary skill in the art given the present description. The method may contain additional or fewer processes than shown and/or described, and may be performed in a different order. Computer-readable code executable by the controller 202 to perform the method may be stored in a computer-readable medium, such as a non-transitory computer-readable medium.

A selection is received 302 when a selectable element 204 is selected.

A selectable element 204 is selected, for example, when a force is applied to the selectable element 204, to actuate the selectable element 204, or when a touch on a selectable element 204 is received and the force applied to the selectable element 204 meets a threshold value. A threshold value, as utilized throughout this disclosure, may be a value that is utilized to distinguish between touches based on a level of applied force on the selectable element 204, for example, to distinguish between a touch on the selectable element 204 and a push on the selectable element 204. In the example in which the selectable element 204 is a mechanical key, the threshold value is a value of force that is utilized to overcome the resistance to actuation, and actuate the mechanical key.

When a selection of a selectable element 204 is received 302, one or more contacts 206 are identified 304, for example, utilizing a look-up table, based on the selectable element 204 that is selected. Each entry in the look-up table identifies the contacts 206 that are turned on to provide an output from the input device 200. Alternatively, the contacts 206 may be identified 304, for example, utilizing memory locations that store entries that identify one or more contacts 206 to turn on to provide an output from the input device 200.

An output is provided 306 utilizing the one or more of the contacts 206 that are identified 304. The output is provided 306 by turning on the one or more of the contacts 206 that are identified 304. Optionally, the output is provided 306 by turning off one or more contacts 206 that are not identified. Alternatively, an output is provided 306 by turning on the one or more of the contacts 206 that are identified 304 in a first time period, and by turning on the one or more of the contacts 206 that are identified 304 in a successive second time period. The output may be provided 306 by turning on the one or more of the contacts 206 that are identified 304 in multiple sequential time periods.

For each selection of a selectable element 204, a unique output is provided to the touch-sensitive display 118.

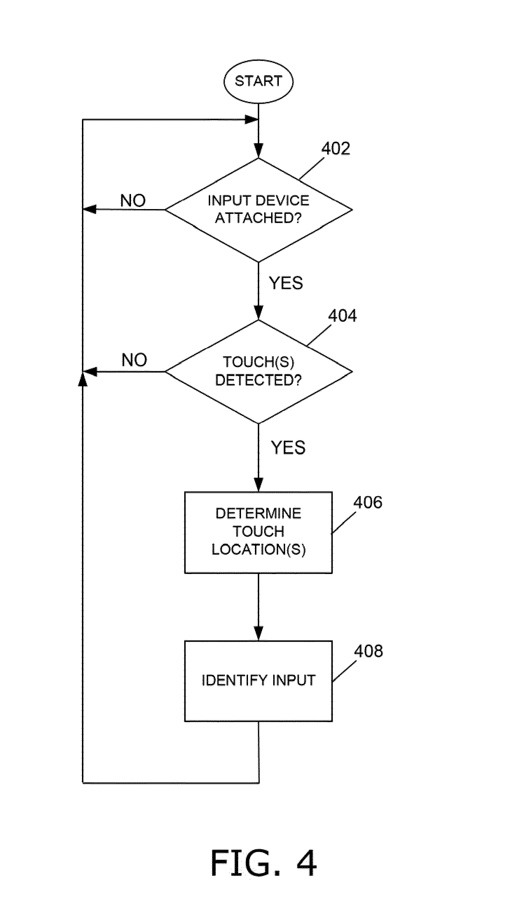

A flowchart illustrating a method of operating the portable electronic device 100 is shown in FIG. 4. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

A signal is received 402 from the sensor 120 when the input device 200 is releasably attached to the portable electronic device 100. When the controller 202 of the input device 200 turns on one or more contacts 206, one or more touches are detected 404 by the touch-sensitive display 118. The one or more touches are detected 404 at locations on the touch-sensitive display 118 that correspond to the locations at which the one or more contacts 206, that are turned on, contact the touch-sensitive display 118.

Based on the determined location 406 of each of the contacts 206 on the touch-sensitive display 118, an input to the portable electronic device 200 is identified 408 by the processor 102.

An input to the portable electronic device 200 is identified, for example, utilizing a look-up table, or any other suitable mapping. Each entry in the look-up table identifies an input that is associated with the touches that are detected at locations on the touch-sensitive display 118 and that correspond to the locations at which the one or more contacts 206, that are turned on, contact the touch-sensitive display 118.

The input to the portable electronic device may be associated with a character, such as an alphabetical letter, a numeral, or a symbol. Optionally, the input may be associated with a function of the portable electronic device, or the input may be associated with a directional movement of an object displayed on the touch-sensitive display 1 18 of the portable electronic device.

The one or more touches detected by the processor 102 may be associated with a binary sequence that includes zeros (0) and ones (1). The zeros (0) indicate that a touch is not detected by the processor 102 and the ones (1) indicate that a touch is detected by the processor 102. The processor 102 may utilize the binary sequence to identify an input to the portable electronic device

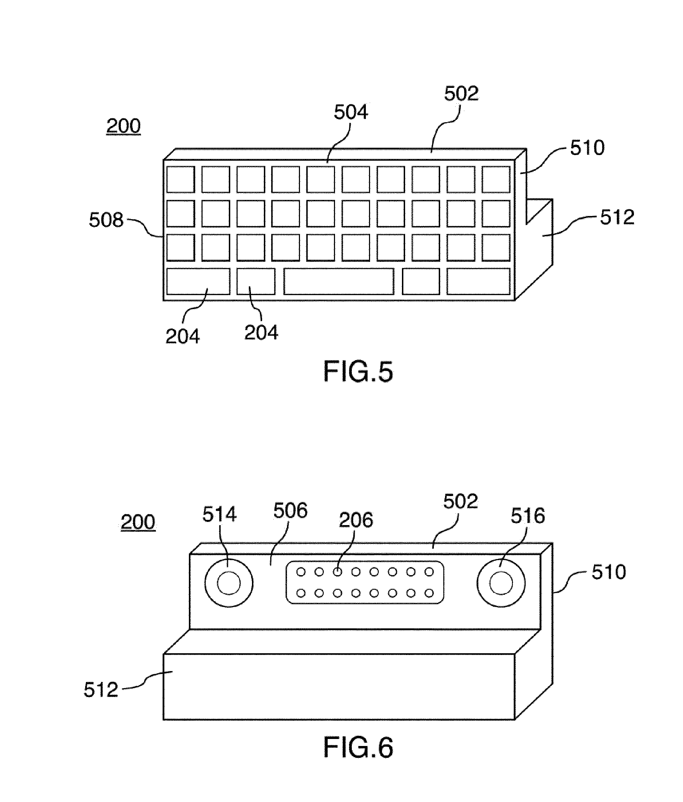

FIG. 5 and FIG. 6 show a front perspective view, and a rear perspective view, respectively, of an example of an input device 200 for the electronic device 100. The input device 200 includes a body 502 that includes a front 504, a back 506, a first end 508, and an opposing second end 510. The input device 200 also includes a ledge 512 that extends from the back 506 of the body 502 in a direction that is substantially perpendicular to the back 506 of the body 502. The ledge 512 provides stability and reduces movement of the portable electronic device 100 relative to the input device 200 when the input device 200 is releasably attached to the portable electronic device 100.

The front 504 of the body 502 includes the plurality of selectable elements 202. The back 506 of the body 502 includes the plurality of contacts 206. The back 506 of the body 502 also includes an attachment device, such as a pair of suction cups 514, 516, that are located adjacent or near the first and second ends 508, 510 of the body 502. Each contact 206 is disposed on the back 506 of the body 502, above the ledge 512 and between the pair of suction cups 514, 516 such that the contacts 206 are spaced apart. The pair of suction cups 514, 516 releasably attach the input device 200 to the touch-sensitive display 118 of the portable electronic device 100 such that the contacts 206 touch or contact the touch-sensitive display 118 at a plurality of spaced apart locations on the touch-sensitive display 118.

Although the input device 200 shown in FIG. 5 and FIG. 6 includes two suction cups 514, 516, the input device 200 may include any suitable number of suctions cups for releasably attaching the input device 200 to the portable electronic device 100. Alternatively, the input device 200 may be releasably attached using any other suitable attachment device or connection.

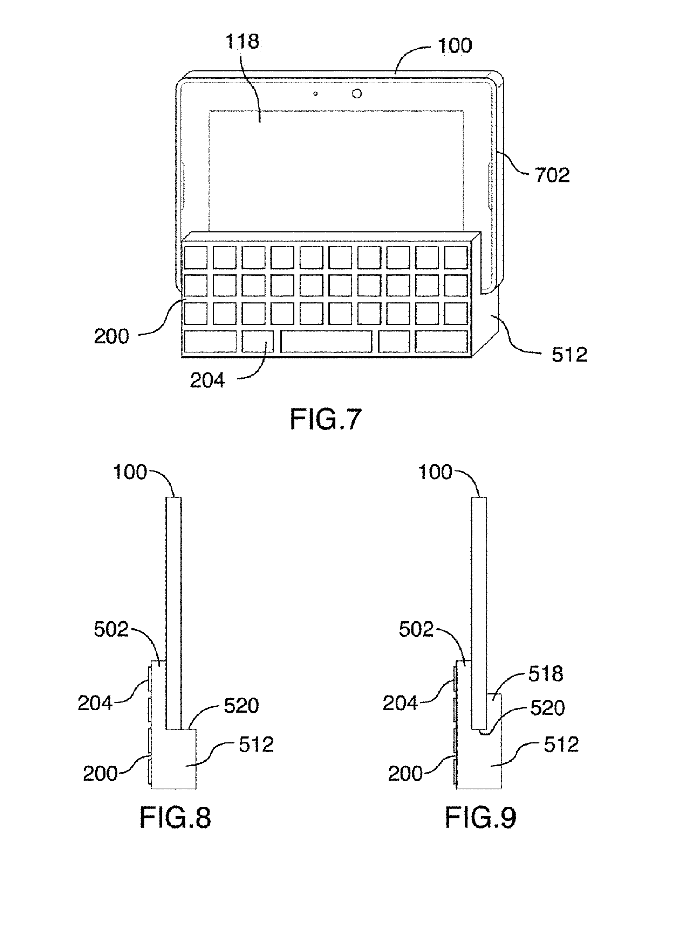

A front perspective view of the input device 200 when releasably attached to the portable electronic device 100 is shown in FIG. 7. In this example, a frame 702 of the portable electronic device 100 rests against the ledge 512 of the input device 200, and the touch sensitive display 118 rests against the back 506 of the input device 200, as shown in FIG. 8. Optionally, the input device 200 may include a support 518 that extends from a top 520 of the ledge 512 in a direction that is substantially parallel to the back 506 of the body 502, as shown in FIG. 9. In this example, the back 506 of the body 502, the ledge 512, and the support 518, together provide a channel that is dimensioned to receive and securely hold the portable electronic device 100 between the back 506 and the support 518. When the portable electronic device 100 is placed within the channel, the frame 702 of the portable electronic device 100 rests against the ledge 51 2 and the support 518, and the touch sensitive display 118 is releasably attached to the suction cups 514, 516 such that the touch-sensitive display 118 rests against the back 506 of the input device 200.

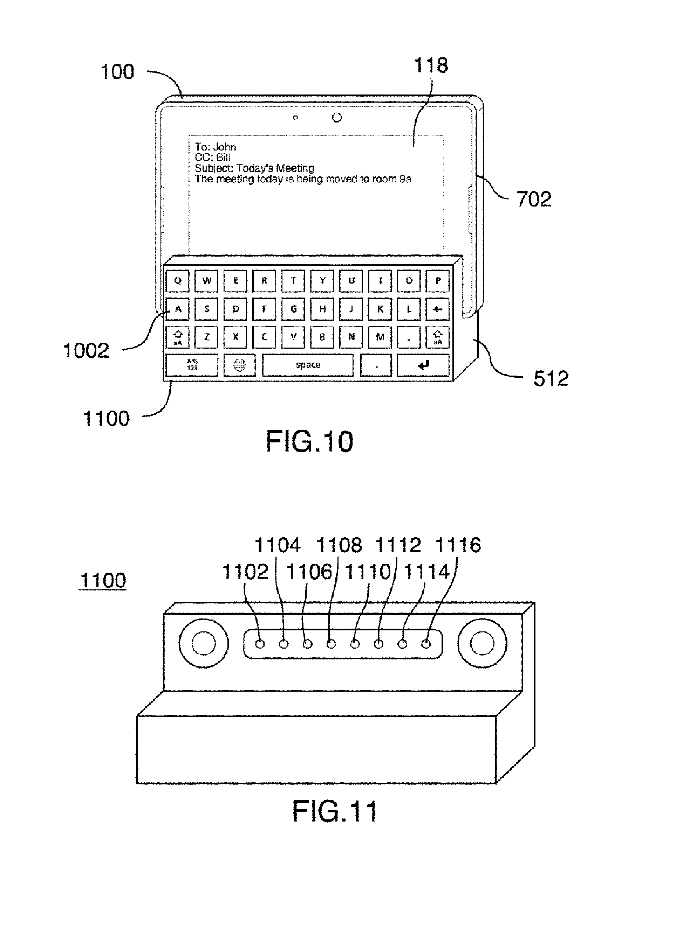

Another example of an input device 1100 and operation of the input device 1100 when releasably attached to the portable electronic device 100 is illustrated in FIG. 10 and FIG. 11. In the example shown in FIG. 10 and FIG. 11, the input device 1100 includes twenty-four (24) selectable elements 1002, and eight (8) contacts 1102, 1104, 1106, 1108, 1110, 1112, 1114, and 1116 that are arranged in a single row. Information associated with an email application is displayed on the touch-sensitive display 118 of the portable electronic device 1 00.

For the purpose of this example and referencing the above-identified steps of the methods identified in FIGs. 3 and 4, when a selection of the selectable element 1002 that is associated with the character "a" is received 302, the contacts 1108, 1110, 1112, and 1116 are identified 304. The controller 202 controls the contacts 1108, 1110, 1112, and 1116 by turning on contacts 1108, 1110, 1112, and 1116 to provide the output 306 that is associated with receipt of selection of the character "a". Touches are detected 404 at locations on the touch-sensitive display 118 that correspond to the locations at which the contacts 1108, 1110, 1112, and 1116 contact the touch-sensitive display 118. Based on the location 406 of each of the contacts 1108, 1110, 1112, and 1116 on the touch-sensitive display 118, the input associated with the character "a" is identified 408 by the processor 102, and the character "a" is displayed on the touch-sensitive display 118.

The output provided 306 is associated with the binary sequence 00011101. The binary sequence 00011101 indicates that contacts 1108, 1110, 1112, and 1116 are turned on and contacts 1102, 1104, 1106, and 1114 are turned off. The touches detected by the processor 102 of the portable electronic device 100 are associated with the binary sequence 00011101. The binary sequence 00011101 is utilized by the processor 102 of the portable electronic device 100 to identify 408 the input associated with the character "a".

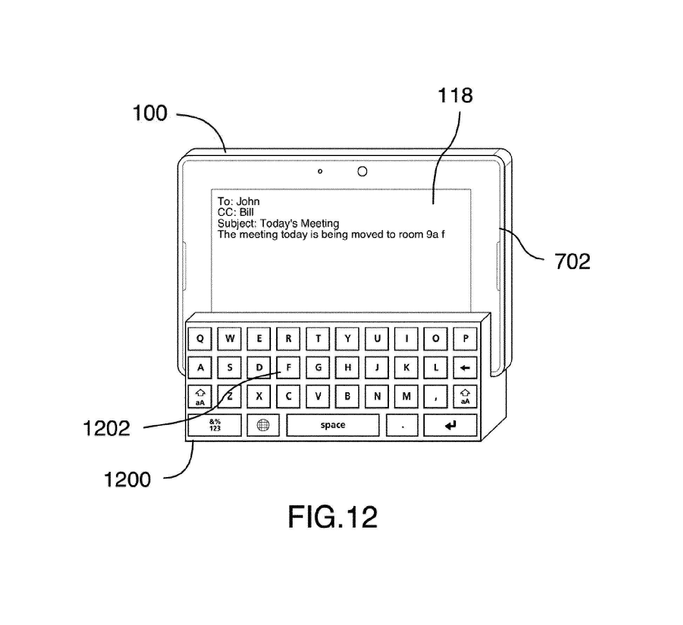

Another example of an input device 1200 and operation of the input device 1200 when releasably attached to the portable electronic device 1 00 is illustrated in FIG. 12. The input device 1200 shown in FIG. 12 is similar to the input device 1100 shown in FIG. 11.

For the purpose of this example, when a selection of the selectable element 1202 that is associated with the character "f" is received 302, the contacts 1104, 1108, and 1112 are identified 304. The controller 202 controls the contacts 1104, 1108, and 1112 by turning on contacts 1104, 1108, and 1112 and by turning off contacts 1102, 1106, 1110, 1114, and 1116 to provide 306 the output that is associated with receipt of selection of the character "f". Touches are detected 404 at locations on the touch-sensitive display 118 that correspond to the locations 406 at which the contacts 1104, 1108, and 1112 contact the touch-sensitive display 118. Based on the location 406 of each of the contacts 1104, 1108, 1112 on the touch-sensitive display 118, the input associated with the character "f" is identified 408 by the processor 102, and the character "f" is displayed on the touch-sensitive display 118.

The output provided 306 is associated with the binary sequence 01010100. The binary sequence 01010100 indicates that contacts 1104, 1108, and 1112 are turned on and contacts 1102, 1106, 1110, 1114, and 1116 are turned off. The touches detected by the processor 102 of the portable electronic device 100 are associated with the binary sequence 01010100. The binary sequence 01010100 is utilized by the processor 102 of the portable electronic device 100 to identify 408 the input associated with the character "f".

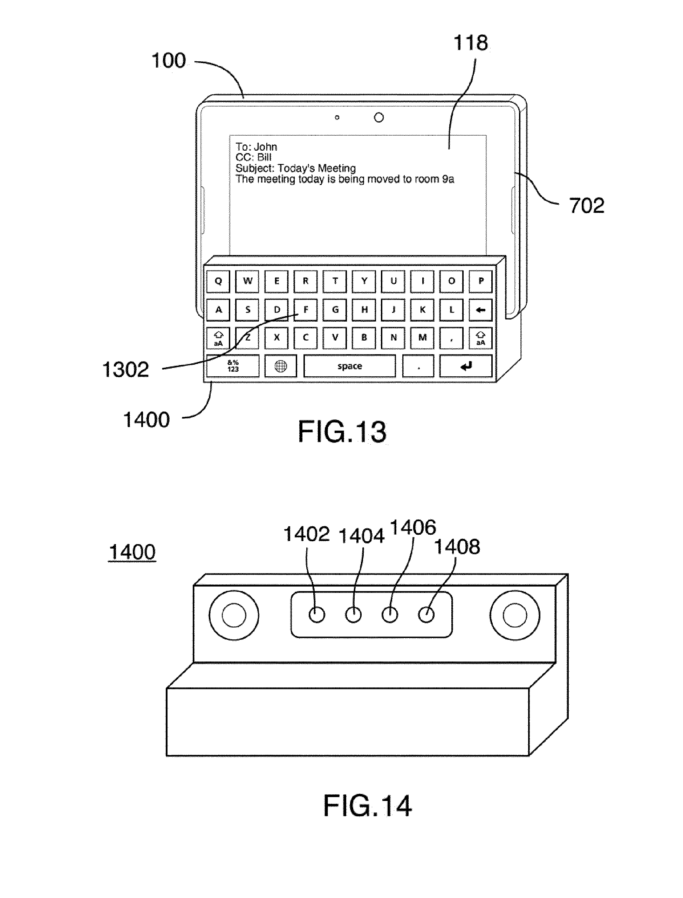

Another example of an input device 1400 and operation of the input device 1400 when releasably attached to the portable electronic device 1 00 is illustrated in FIG. 13 and FIG. 14. In the example shown in FIG. 13 and FIG. 14, the input device 1400 includes twenty-four (24) selectable elements 1302, and four (4) contacts 1402, 1404, 1406, and 1408 that are arranged in a single row. Information associated with an email application is displayed on the touch-sensitive display 118 of the portable electronic device 100. The contacts 1402, 1404, 1406, and 1408 are controlled and turned on in two successive time periods to provide the output.

For the purpose of this example, when a selection of the selectable element 1302 that is associated with the character "a" is received 302, the contact 1408 is identified 304 for the first time period, and contacts 1402, 1404, and 1408 are identified 304 for the second time period. The controller 202 controls contacts 1402, 1404, 1406, 1408 by turning on contact 1408 in the first time period, and by turning on contacts 1402, 1404, and 1408 in the second time period to provide 306 the output that is associated with receipt of selection of the character "a". Touches are detected 404 at locations on the touch-sensitive display 118 that correspond to the locations at which the contact 1408 contacts the touch-sensitive display 118 in the first time period, and a location where contacts 1402, 1404, and 1408 contact the touch-sensitive display 118 in the second time period. Based on the location 406 of contact 1408 on the touch-sensitive display 118 in the first time period, and the location 406 of each of contacts 1402, 1404, and 1408 on the touch-sensitive display 118 in the second period, the input associated with the character "a" is identified 408 by the processor 102, and the character "a" is displayed on the touch-sensitive display 118.

The output provided 306 is associated with the binary sequence 0001 in the first time period, and 1101 in the second time period. The binary sequence 0001 indicates that contact 1408 is turned on, and contacts 1402, 1404, and 1406 are turned off in the first time period. The binary sequence 1101 indicates that contact 1402, 1404, 1408 are turned on, and contact 1406 is turned off in the second time period. The processor 102 of the portable electronic device 100 receives the binary sequences 0001 and 1101 in two successive time periods and identifies 408 the input associated with the character "a" utilizing the binary sequence 00011101.

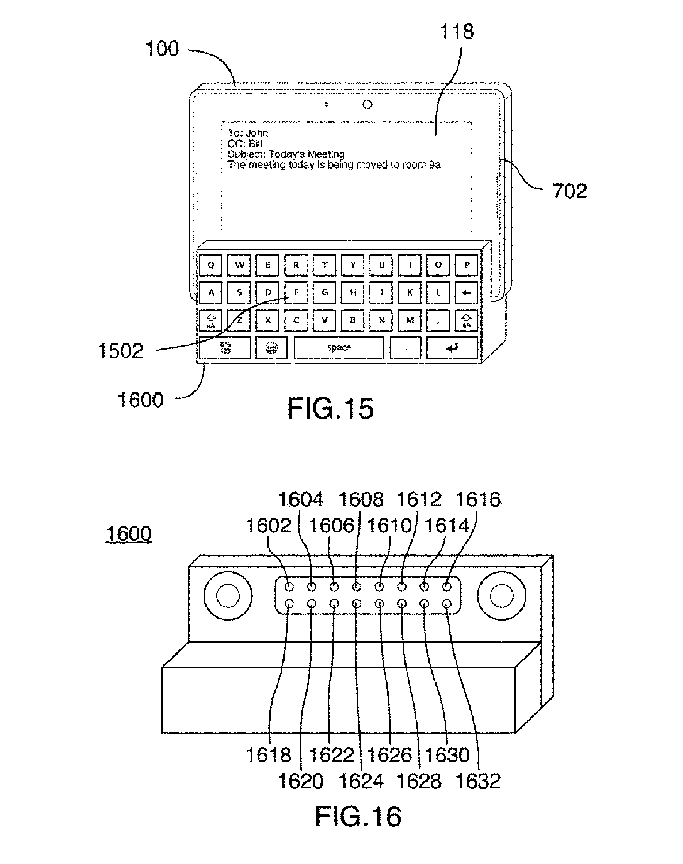

An example of an input device 1600 and operation of the input device 1600 when releasably attached to the portable electronic device 100 is illustrated in FIG. 15 and FIG. 16. In the example shown in FIG. 15 and FIG. 16, the input device 200 includes twenty-four (24) selectable elements 1502, and sixteen (16) contacts 1602, 1604, 1606, 1608, 1610, 1612, 1614, 1616, 1618, 1620, 1622, 1624, 1626, 1628, 1630, and 1632. The contacts 1602, 1604, 1 606, 1608, 1610, 1612, 1614, 1616, 1618, 1620, 1622, 1624, 1626, 1628, 1630, and 1632 are arranged in two adjacent rows of eight (8) contacts. Information associated with an email application is displayed on the touch-sensitive display 118 of the portable electronic device 100.

For the purpose of this example, when a selection of the selectable element 1502 that is associated with the character "a" is received 302, the contacts 1608, 1610, 1612, 1618 are identified 304. The controller 202 controls the contacts 1608, 1610, 1612, 1618 in the first row by turning on contact 1608, 1610, 1612, and 1616, and controls the contacts 1618, 1620, 1622, 1630 in the second row by turning on contacts 1618, 1620, 1622, and 1630 to provide 306 the output that is associated with receipt of selection of the character "a".

Touches are detected 404 at locations on the touch-sensitive display 118 that correspond to the locations at which the contacts 1608, 1610, 1612, 1618 of the first row contact the touch-sensitive display 118, and at which contacts 1618, 1620, 1622 and 1630 of the second row contact the touch-sensitive display 118. Based on the location of each of the contacts 1608, 1610, 1612, 1618 of the first row on the touch-sensitive display 118, the input associated with the character "a" is identified 408 by the processor 102 of the portable electronic device 100, and the character "a" is displayed on the touch-sensitive display 118.

The output provided 306 is associated with the binary sequence 00011101 in the first row. The binary sequence 00011101 indicates that contacts 1608, 1610, 1612, 1616 are turned on, and contacts 1602, 1604, 1606, and 1614 are turned off. The binary sequence in the second row is an inverse of the binary sequence in the first row. The binary sequence in the second row, 11100010, indicates that contacts 1618, 1620, 1622, and 1630 are turned on and contacts 1624, 1626, 1628, and 1632 are turned off.

In this example, the touches detected by the processor 102 of the portable electronic device 100 are associated with the binary sequences 00011101 and 11100010. The processor 102 of the portable electronic device 100 compares the binary sequence 00011101 to the binary sequence 0001 1 1 01 , and when the binary sequence associated with the detected touches in the second row (e.g. 11100010) is an inverse of the binary sequence associated with the touches detected in the first row (e.g. 00011101), the binary sequence 00011101 is utilized by the processor 102 to identify 408 the input associated with the character "a". When the binary sequence associated with the detected touches in the second row (e.g. 11100010) is not an inverse of the binary sequence associated with the touches detected in the first row (e.g. 00011101), an error occurred in receiving output provided by the input device 1600. An input associated with the character "a" is therefore not identified and the character "a" is also not displayed on the touch-sensitive display 118.

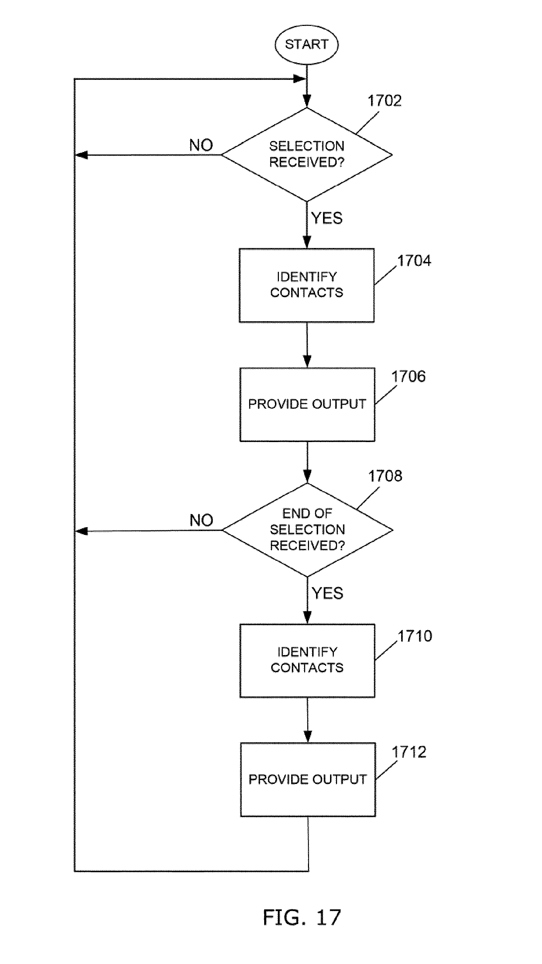

A flowchart illustrating another method of operating the input device 200 is shown in FIG. 17. The method may be carried out by software executed, for example, by the controller 202. Coding of software for carrying out such a method is within the scope of a person of ordinary skill in the art given the present description. The method may contain additional or fewer processes than shown and/or described, and may be performed in a different order. Computer-readable code executable by the controller 202 to perform the method may be stored in a computer-readable medium, such as a non-transitory computer-readable medium. The method carried out in 1702, 1704, and 1706 is similar to the method carried out in 302, 304, and 306, and is therefore not further described herein.

After an output is provided 1706, a signal is received 1708 when the selectable element 204 is released. The release of the selectable element 204 after selection of the selectable element 204 indicates an end of a selection of the selectable element 204.

A selectable element 204 is released, for example, when a force is applied to the selectable element 204, to actuate the selectable element 204, or when a touch on a selectable element 204 is received and the force applied to the selectable element 204 falls below a threshold value.

When an end of selection of a selectable element 204 is received 1708, one or more contacts 206 are identified 1710, for example, utilizing a look-up table, based on the selectable element 204 that is selected. Each entry in the look-up table identifies the contacts 206 that are turned on to provide an output from the input device 200. Alternatively, the contacts 206 may be identified 1710, for example, utilizing memory locations that store entries that identify one or more contacts 206 to turn on to provide an output from the input device 200.

An output is provided 1712 utilizing the one or more of the contacts 206 that are identified 1710. The output is provided 1712 by turning on the one or more of the contacts 206 that are identified 1710. Optionally, the output is provided 1712 by turning off one or more contacts 206 that are not identified. Alternatively, an output is provided 1712 by turning on the one or more of the contacts 206 that are identified 1710 in a first time period, and by turning on the one or more of the contacts 206 that are identified 1710 in a successive second time period. The output may be provided 1712 by turning on the one or more of the contacts 206 that are identified 1710 in multiple sequential time periods.

For each end of selection of a selectable element 204, a unique output is provided to the touch-sensitive display 118.

Referring again to FIG. 10 and FIG. 11, another example of the input device 1100 and the operation of the input device 1100 when releasably attached to the portable electronic device 100 is described.

In this example, when a selection of the selectable element 1002 that is associated with the character "a" is received 1702, the contacts 1108, 1110, 1112, and 11 16 are identified 1704. The controller 202 controls the contacts 1108, 1110, 1112, and 1116 by turning on contacts 1108, 1110, 1112, and 1116 to provide 1712 the output that is associated with receipt of selection of the character "a". Touches are detected 404 at locations on the touch-sensitive display 118 that correspond to the locations 406 at which the contacts 1108, 1110, 1112, and 1116 contact the touch-sensitive display 118. Based on the location of each of the contacts 1108, 1110, 1112, and 1116 on the touch-sensitive display 118, the input associated with the character "a" is identified 408 by the processor 102 of the portable electronic device 100, and the character "a" is displayed on the touch-sensitive display 118.

The output provided 1708 is associated with the binary sequence 00011101. The binary sequence 00011101 indicates that contacts 1108, 1110, 1112, and 1116 are turned on and contacts 1102, 1104, 1106, and 1114 are turned off. The touches detected by the processor 102 of the portable electronic device 100 are associated with the binary sequence 00011101. The binary sequence 00011101 is utilized by the processor 102 of the portable electronic device 100 to identify 408 the input associated with the character "a".

After the output is provided 1706, the input device 1100 awaits receipt of an end of a selection of the selectable element 1002 that is associated with the character "a. When an end of a selection of the selectable element 1002 that is associated with the character "a" is received 1708, the contacts 1102, 1104, 1106, and 1108 are identified for a first time period, and contacts 1108, 1110, 1112, and 1116 are identified 1710 for a second time period. The controller 202 controls contacts 1102, 1104, 1106, 1108, 1110, 1112, 1114, 1116, by turning on contacts 1102, 1104, 1106, 1108, and turning off contacts 1110, 1112, 1114, 1116 in the first time period, and by turning on contacts 1108, 1110, 1112, 1116, and turning off contacts 1102, 1104, 1106, 1114 in the second time period to provide 1712 the output that is associated with receipt of the end of the selection of the character "a". Touches are detected 404 at locations on the touch-sensitive display 118 that correspond to the locations at which the contacts 1102, 1104, 1106, 1108 contact the touch-sensitive display 118 in the first time period, and a location where contacts 1108, 1110, 1112, 1116 contact the touch-sensitive display 118 in the second time period. Based on the location of each of the contacts 1102, 1104, 1106, 1108 on the touch-sensitive display 118 in the first time period, and the location of each of contacts 1108, 1110, 1112, 1116 on the touch-sensitive display 118 in the second period, the input associated with the end of the selection of the character "a" is identified by the processor 102.

The output provided 1712 is associated with the binary sequence 11110000 in the first time period, and 00011101 in the second time period. The binary sequence 11110000 indicates that contacts 1102, 1104, 1106, 1108 are turned on, and contacts 1110, 1112, 1114, 1116 are turned off in the first time period. The binary sequence 00011101 indicates that contacts 1108, 1110, 1112, 1116 are turned on, and contacts 1102, 1104, 1106, 1114 are turned off in the second time period. The processor 102 of the portable electronic device 100 receives the binary sequences 11110000 and 00011101 in two successive time periods, and identifies 408 the input associated with the end of the selection of the character "a" utilizing the binary sequence 1111000000011101.

The input device 200 described herein facilitates typing on a touch-sensitive display 118 of a portable electronic device, or the selection of features displayed on the touch-sensitive display 118. The input device 200 may be sized such that the input device 200 covers a relatively small portion of a touch-sensitive display 118 when the input device 200 is releasably attached to the portable electronic device 100, thereby reducing the amount of information displayed on the touch-sensitive display 118 that is obscured by the input device 200.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come with meaning and range of equivalency of the claims are to be embraced within their scope.

## Claims

1. An input device, comprising:
a body releasably attachable to a portable electronic device having a touch-sensitive display, the body comprising:
a plurality of selectable elements;
a plurality of contacts for contacting the touch-sensitive display when the input device is attached to the portable electronic device; and
a controller operatively coupled to the selectable elements and to the contacts for receiving a selection of one of the selectable elements, identifying one or more of the contacts based on receipt of the selection of the one of the selectable elements, and providing an output utilizing the one or more of the identified contacts.

2. The input device according to claim 1, wherein providing an output comprises:
turning on the one or more of the identified contacts, and/or
turning off the contacts that are not identified when the one or more of the contacts that are identified are turned on.

3. The input device according to claim 1 or 2, wherein the controller receives an end of the selection of the one of the plurality of selectable elements, identifies one or more of the contacts based on receipt of the end of the selection of the one of the selectable elements, and provides a further output utilizing the one or more of the identified contacts.

4. The input device according to claim 3, wherein providing a further output comprises:
turning on the one or more of the identified contacts, and/or
turning off the contacts that are not identified when the one or more of the contacts that are identified are turned on.

5. The input device according to any one of claims 1 to 4, wherein the selectable elements comprise:
keys of a keyboard in which each key is associated with a character, and/or directional keys associated with movement of an object displayed on the touch-sensitive display, and/or
keys that are associated with functions of the portable electronic device.

6. The input device according to any one of claims 1 to 5, wherein the body comprises an attachment mechanism for releasably attaching the input device to the touch-sensitive display.

7. The input device according to claim 6, wherein the attachment mechanism comprises at least two suction cups.

8. The input device according to any one of claims 1 to 7, comprising a ledge extending from a back of the body, substantially perpendicular to a back of the body, for supporting the portable electronic device when the input device is attached to the portable electronic device.

9. The input device according to claim 8, comprising a support extending from a top of the ledge, substantially parallel to the back of the body, for supporting the portable electronic device when the input device is attached to the portable electronic device.

10. A method comprising:
receiving a selection of one of a plurality of selectable elements of an input device;
identifying one or more of a plurality of contacts that contact a touch-sensitive display of a portable electronic device when the input device is attached to the portable electronic device, based on receipt of selection of the one of the selectable elements;
providing an output utilizing the one or more of the identified contacts.

11. The method according to claim 10, wherein providing the output comprises:
turning on the one or more of the identified contacts, and/or
turning off one or more contacts that are not identified when the one or more of the contacts that are identified are turned on.

12. A system comprising: an input device, comprising:
a body releasably attachable to a portable electronic device having a touch-sensitive display, the body comprising:
a plurality of selectable elements;
a plurality of contacts for contacting the touch-sensitive display when the input device is attached to the portable electronic device; and
a controller operatively coupled to the selectable elements and to the contacts for receiving a selection of one of the selectable elements, identifying one or more of the contacts based on receipt of selection of the one of the selectable elements, and providing an output utilizing the one or more of the contacts that are identified;
the portable electronic device comprising:
a processor operatively coupled to the touch-sensitive display for detecting touches at a plurality of locations, and identifying an input based on the touches that are detected at the plurality of locations.

13. The system according to claim 12, wherein providing an output comprises:
turning on the one or more of the identified contacts, and/or
turning off the contacts that are not identified when the one or more of the contacts that are not identified are turned on.

14. The system according to claim 12 or 13, wherein the body comprises an attachment mechanism for releasably attaching the input device to the touch-sensitive display.

## Amended claims

### Amended claims in accordance with Rule 137(2) EPC.

**1.** An input device, comprising:
a body releasably attachable to a portable electronic device having a touch-sensitive display, the body comprising:
a plurality of selectable elements;
a plurality of contacts for contacting the touch-sensitive display when the input device is attached to the portable electronic device, wherein the plurality of contacts have an area smaller than an area of the plurality of selectable elements and the input device covers a portion of the touch-sensitive display that is smaller than the area of the plurality of selectable elements; and
a controller operatively coupled to the selectable elements and to the contacts for receiving a selection of one of the selectable elements, identifying one or more of the contacts based on receipt of the selection of the one of the selectable elements, and providing an output utilizing the one or more of the identified contacts.

**2.** The input device according to claim 1, wherein providing an output comprises:
turning on the one or more of the identified contacts, and/or
turning off the contacts that are not identified when the one or more of the contacts that are identified are turned on.

**3.** The input device according to claim 1 or 2, wherein the controller receives an end of the selection of the one of the plurality of selectable elements, identifies one or more of the contacts based on receipt of the end of the selection of the one of the selectable elements, and provides a further output utilizing the one or more of the identified contacts.

**4.** The input device according to claim 3, wherein providing a further output comprises:
turning on the one or more of the identified contacts, and/or
turning off the contacts that are not identified when the one or more of the contacts that are identified are turned on.

**5.** The input device according to any one of claims 1 to 4, wherein the selectable elements comprise:
keys of a keyboard in which each key is associated with a character, and/or directional keys associated with movement of an object displayed on the touch-sensitive display, and/or
keys that are associated with functions of the portable electronic device.

**6.** The input device according to any one of claims 1 to 5, wherein the body comprises an attachment mechanism for releasably attaching the input device to the touch-sensitive display.

**7.** The input device according to claim 6, wherein the attachment mechanism comprises at least two suction cups.

**8.** The input device according to any one of claims 1 to 7, comprising a ledge extending from a back of the body, substantially perpendicular to a back of the body, for supporting the portable electronic device when the input device is attached to the portable electronic device.

**9.** The input device according to claim 8, comprising a support extending from a top of the ledge, substantially parallel to the back of the body, for supporting the portable electronic device when the input device is attached to the portable electronic device.

**10.** A method comprising:
receiving a selection of one of a plurality of selectable elements of an input device;
identifying one or more of a plurality of contacts that contact a touch-sensitive display of a portable electronic device when the input device is attached to the portable electronic device, based on receipt of selection of the one of the selectable elements, wherein the plurality of contacts have an area smaller than an area of the plurality of selectable elements and the input device covers a portion of the touch-sensitive display that is smaller than the area of the plurality of selectable elements;
providing an output utilizing the one or more of the identified contacts.

**11.** The method according to claim 10, wherein providing the output comprises:
turning on the one or more of the identified contacts, and/or
turning off one or more contacts that are not identified when the one or more of the contacts that are identified are turned on.

**12.** A system comprising: an input device, comprising:
a body releasably attachable to a portable electronic device having a touch-sensitive display, the body comprising:
a plurality of selectable elements;
a plurality of contacts for contacting the touch-sensitive display when the input device is attached to the portable electronic device, wherein the plurality of contacts have an area smaller than an area of the plurality of selectable elements and the input device covers a portion of the touch-sensitive display that is smaller than the area of the plurality of selectable elements; and
a controller operatively coupled to the selectable elements and to the contacts for receiving a selection of one of the selectable elements, identifying one or more of the contacts based on receipt of selection of the one of the selectable elements, and providing an output utilizing the one or more of the contacts that are identified; the portable electronic device comprising:
a processor operatively coupled to the touch-sensitive display for detecting touches at a plurality of locations, and identifying an input based on the touches that are detected at the plurality of locations.

**13.** The system according to claim 12, wherein providing an output comprises:
turning on the one or more of the identified contacts, and/or
turning off the contacts that are not identified when the one or more of the contacts that are not identified are turned on.

**14.** The system according to claim 12 or 13, wherein the body comprises an attachment mechanism for releasably attaching the input device to the touch-sensitive display.

**15.** The input device according to any one of claims 1 to 9, wherein the plurality of selectable elements are greater in number than the plurality of contacts.
